# DEMANDE DE BREVET EUROPEEN

(11) **EP 0 844 569 A1**
(43) Date de publication de la demande: **27.05.1998**
(21) Numéro de dépôt: 96430016.4
(22) Date de dépôt: 22.11.1996
(51) Int. Cl.: G06F 15/02, G07F 7/10

(54) **Appareil à reconnaissance vocale pour conversion de devises**

(71) Demandeur: Caisse Régionale de Crédit Agricole Mutuel du Gard, 30000 Nimes (FR)
(72) Inventeur: Vertuel Bardie, Jacqueline, 34000 Monpellier (FR)

(57) **Abrégé**

L'invention concerne un appareil portable, à usage du grand public, qui a pour fonction de convertir une monnaie d'une devise dans une autre devise, à partir d'un programme enregistré sur une puce électronique et, assurant une fonction de reconnaissance vocale.
La reconnaissance vocale s'exerce sur la langue du pays dans lequel l'appareil a été mis à disposition de l'utilisateur final.
Le programme enregistré sur la puce électronique porte le nombre de devises qu'il peut convertir entre elles, leurs libellés, les codes associés à ces libellés, les valeurs de parité des devises à convertir et les données nécéssaires à la personnalisation de la reconnaissance vocale (voix, accents atypiques).
La reconnaissance vocale reconnaît automatiquement, toute forme d'expression du montant à convertir, exprimé dans la devise et dans la langue du pays pour lequel l'appareil a été programmé.
Le résultat de la conversion commandée oralement, est restitué oralement et (ou) affiché sur écran.

## Description

**L**a présente invention concerne un appareil portable, qui a pour fonction de convertir une monnaie d'une devise dans une autre devise, à usage du grand public, à partir d'un procédé de reconnaissance vocale.

Cette fonction de conversion d'une monnaie d'une devise dans une autre devise est actuellement, accessible à travers l'usage d'une calculette.

Dans le contexte du passage à l'EURO, l'utilisation d'une calculette est difficilement envisageable par tous les publics, pour des raisons d'ergonomie (doigts malhabiles, mauvaise vue), de méconnaissance des parités, de difficulté à programmer l'opération arithmétique de conversion.

Pour remédier à ces inconvénients, la présente invention propose un appareil pré-programmable de conversion de 2 à n devises dans une autre devise, à partir d'un procédé de reconnaissance vocale, qui permettrait de mettre sur le marché, 2 formules,
- un appareil dans une formule simplifiée, dite 'Nationale', qui permet de passer d'une monnaie nationale à l'Euro, et vice-versa. Les appareils, dans cette formule, reconnaissent la langue nationale du pays dans lequel ils sont mis à disposition de l'utilisateur final. Ils sont programmables pour être utilisables dans tous les pays de la 〈〈Communauté EURO〉〉. Ils sont destinés à familiariser le grand public à l'utilisation de l'Euro, en lui permettant de se référer à la monnaie nationale dont il a l'habitude.
- un appareil dans une formule plus sophistiquée, dite 'Internationale', qui permet de convertir différentes monnaies choisies, dans la monnaie de référence (correspondant à la monnaie nationale du pays dans lequel l'appareil est mis à disposition de l'utilisateur final), et vice-versa. Son utilisation doit donc être programmée, en fonction des besoins à un instant, de son utilisateur. Il est destiné à des publics de tourisme.

**L**e but de l'appareil, dans ses 2 formules 'Nationale' et 'Internationale', objet de la présente invention, est de satisfaire tous les publics, par des manipulations instinctives, sur un appareil portable,
- l'appareil dans une seule main, sous la forme d'une montre, d'un pendentif, d'un alphapage, d'un petit téléphone portable, d'un porte-clés, d'une carte munie d'un clip, d'un organiseur,
- à travers l'utilisation d'une seule touche de mise sous tension,
- par la dictée du montant à convertir et du libellé de la devise du montant à convertir.

Un autre but de cette invention est de permettre l'établissement d'une prestation personnalisée du fournisseur en fonction des besoins du futur utilisateur de cet appareil, objet de la présente invention. Cette personnalisation peut être :
- le chargement dans l'appareil de la valeur d'une parité entre 2 devises, à un instant donné.
- la reconnaissance vocale appliquée à l'accent atypique de l'utilisateur, si nécessaire.
*Cette personnalisation de l'appareil par le fournisseur, suppose que le fournisseur dispose d'une machine capable de se connecter à la puce de l'appareil, objet de la présente invention, pour y charger les parités entre devises et (ou) les paramètres de personnalisation de reconnaissance de la voix. Nous ne décrirons pas cette machine, nécessaire au fournisseur, dont les caractéristiques existent sur le marché.*

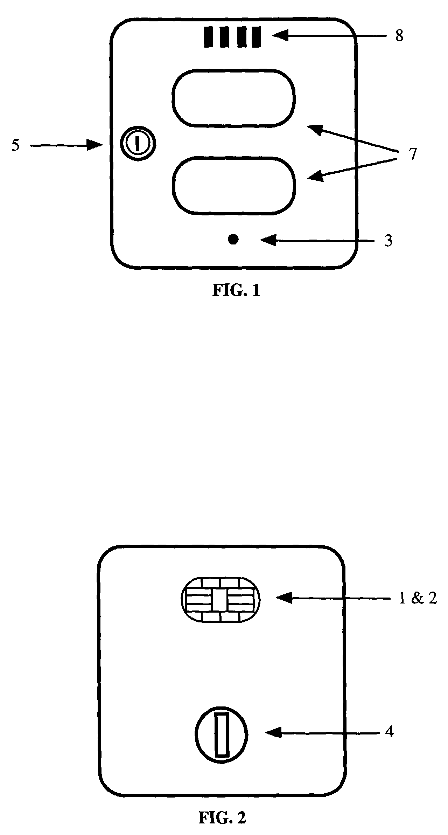

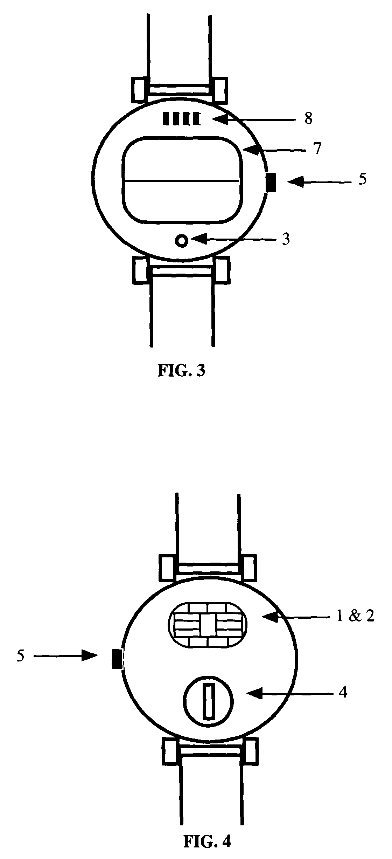

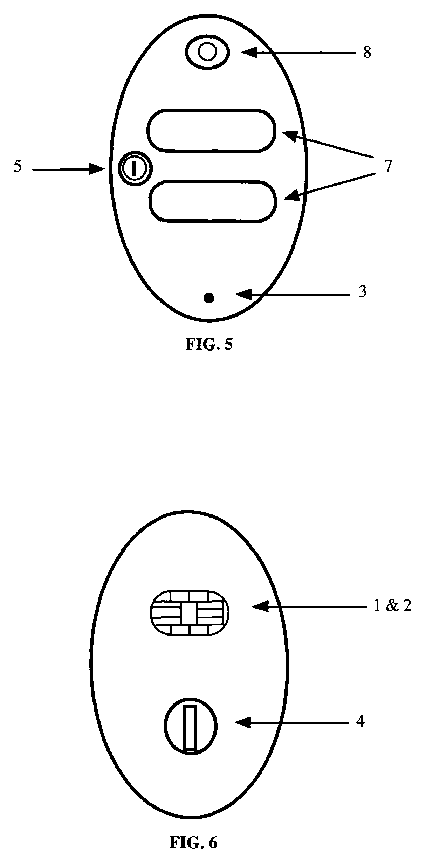

**L**'appareil, objet de la présente invention, est représenté en annexe par différents modéles donnés comme des exemples non limitatifs, se présentant chacun sous forme de 2 vues (Exemple = FIG 1 : vue de face; FIG 2: vu de dos).
Il est composé des éléments suivants,repérés du numéro porté sur les figures,
- 1 : une puce électronique, support du programme capable d'activer les autres éléments, pour servir les fonctionnalités décrites par la suite,
- 2: un dispositif de connexion sur la puce, permettant le chargement dans la puce des paramètres de personnalisation par la machine du fournisseur de l'appareil, objet de l'invention,
- 3: un microphone,
- 4: une source d'énergie,
- 5: un bouton poussoir permettant la mise sous tension de l'appareil et l'alimentation des différents composants du dit-appareil,
- 6: un dispositif de rechargement de la source d'énergie, si le mode d'alimentation retenue est une batterie rechargeable ou d'origine solaire- (non représenté sur les figures en annexe),
- 7: un écran de visualisation de 2 lignes ou 2 écrans d'une ligne chacun, suivant le design choisi pour l'appareil, -facultatif, suivant option de restitution du résultat de la conversion choisie-,
- 8: un haut-parleur, -facultatif, suivant option de restitution du résultat de la conversion choisie-.
Dans la description, nous qualifions de Facultatif, tout élément ou fonction non strictement nécessaires au fonctionnement de l'appareil. Nous les intégrons toutefois, dans notre description, parce qu'ils apportent un confort d'utilisation indéniable, voire ouvrent le marché de diffusion. Notre souci étant la mise à disposition d'un appareil au grand public, il est important de veiller à ne pas obèrer le prix de revient de cet appareil.

**L**e fonctionnement de l'appareil, objet de la présente invention, est commandé par le programme inscrit sur la puce électronique. Ce programme assure les fonctionnalités obligatoires suivantes,
→ la reconnaissance vocale de montants et de libellés de devises, exprimés dans la langue nationale du pays dans lequel l'appareil a été mis à disposition de l'utilisateur final. Le programme accepte de reconnaître indifféremment, le point ou la virgule, dans la langue du pays pour laquelle il est programmé. Le programme reconnaît automatiquement, toute forme d'expression du montant dans la devise de ce pays. Ainsi, sur un appareil acquis en France, il peut être inutile de dire 'Franc français', par contre, il sera indispensable de dire 'Franc Belge' ou 'Franc suisse', si le montant dicté l'exige. La forme du couple dicté, à savoir le montant et la devise dans laquelle s'exprime ce montant, peut être reconnu par le programme, quelque soit l'ordre dans lequel il est dicté,
   Exemple:
   - soit,: neuf cent quatre vingt dix neuf mille neuf cent quatre vingt dix neuf virgule quatre vingt dix neuf Francs français,
   correspondant à, en chiffres : 999 999 virgule 99 Francs Français
   - ou indifféremment,: neuf cent quatre vingt dix neuf mille neuf cent quatre vingt dix neuf Francs français quatre vingt dix neuf,
   correspondant à, en chiffres : 999 999 Francs Français 99
   - ou indifféremment: neuf cent quatre vingt dix neuf mille neuf cent quatre vingt dix neuf Francs quatre vingt dix neuf centimes,
   correspondant à, en chiffres : 999 999 Francs 99 centimes
   - ou indifféremment: neuf cent quatre vingt dix neuf mille neuf cent quatre vingt dix neuf Francs quatre vingt dix neuf,
   correspondant à, en chiffres : 999 999 Francs 99
   - ou indifféremment: neuf cent quatre vingt dix neuf mille neuf cent quatre vingt dix neuf point quatre vingt dix neuf Francs,
   correspondant à, en chiffres : 999 999 point 99 Francs
   - ou indifféremment: neuf cent quatre vingt dix neuf mille neuf cent quatre vingt dix neuf Francs,
   correspondant à, en chiffres : 999 999 Francs
   - ou indifféremment: neuf neuf neuf neuf neuf neuf virgule neuf neuf Francs Français
   - ou indifféremment: neuf neuf neuf neuf neuf neuf point neuf neuf Francs Français
   - ou indifféremment: neuf neuf neuf neuf neuf neuf Francs neuf neuf
   - ou indifféremment: neuf neuf neuf neuf neuf neuf Francs neuf neuf centimes
   - ou indifféremment: neuf neuf neuf neuf neuf neuf Francs
   Cet appareil, destiné au grand public, peut limiter sa reconnaissance à des montants manipulés couramment par ce public: (Exemple: 999 999,99 Francs Français ou équivalent dans les autres devises).
   Si la devise dictée n'est pas reconnue par l'appareil, alors l'appareil se met en veille au bout d'un *laps de temps ou émet un bip* sonore voire un message d'erreur si le haut-parleur est une option retenue.
→ l'opération de conversion d'une monnaie dans une autre, qui permet de convertir le couple dicté (montant + devise) en l'autre montant correspondant à la 2ème devise, explicitée de façon différente suivant le nombre de devises de conversion retenu,
   - si le nombre de devises retenu est 2, il s'agit d'un appareil fourni dans une formule 'dite Nationale' et il est inutile d'indiquer la 2ème devise dans laquelle la conversion doit être effectuée,
   - si le nombre de devises retenu est supérieur à 2, il s'agit alors d'un appareil fourni dans une formule 'dite Internationale' et il est nécessaire d'indiquer la devise dans laquelle la conversion doit être effectuée SI la devise du montant à convertir est la devise de référence choisie par l'utilisateur final,
      Exemple d'utilisation d'un appareil vendu au Japon, pour lequel la monnaie de référence est le YEN et les parités de conversion paramétrées par le fournisseur à la demande de l'utilisateur final, seraient le Franc et le Dollar,
      la dictée d'un montant de x YEN à convertir nécessite d'être complétée par
      la dictée de la devise de conversion;
      A l'inverse, sur ce même appareil, la dictée d'un montant en dollars, peut ne pas nécessiter la dictée de la devise de conversion; par défaut, la conversion se fera dans la monnaie de référence.
→ l'affichage sur écran du montant à convertir et du montant converti et, des codes-devises correspondants, Cet affichage doit se faire et durer pendant le délai convenable pour un contrôle et une consultation confortable ou jusqu'à l'interruption provoquée par un nouvel ordre de demande de conversion ou jusqu'à l'interruption provoquée par la mise hors tension.
→ la mise en veille qui a pour objet d'économiser la source d'énergie utilisée pour cet appareil. Elle est activée après un laps de temps suffisant pour que la consultation des écrans soit confortable ou chaque fois que, l'appareil étant sous tension, le programme ne reconnaît aucun ordre de conversion, dicté sous la forme qu'il attend.
→ la capacité d'accepter par le programme, sur des paramètres modifiables, le chargement de valeurs de parité d'une devise dans une autre devise, La puce électronique peut être mise à jour chez le distributeur de l'appareil, pour enregistrer les parités de devises dans une autre devise.
   Cette fonctionnalité est intéressante pour les appareils dits de formule Internationale. Le nombre total de parités chargeables d'une devise dans une autre, est un nombre fini, qui sera déterminé par l'étude de marché à faire, pour commercialiser cet appareil. Les appareils de formule nationale pourraient en disposer, tant que l'euro n'est pas déclaré 'monnaie nationale', dans le pays concerné.
→ la capacité d'accepter le chargement de paramètres permettant d'adapter la reconnaissance vocale à des accents atypiques,
   Les programmes de reconnaissance vocale savent 's'auto-enrichir', en reconnaissant un texte de référence, lu par une personne ayant un paner atypique (exemple : un accent prononcé).
   Lors de cette lecture, un programme de reconnaissance vocale, situé sur la machine du fournisseur, fait la relation entre les phonèmes du texte de référence et la voix décodée; il enregistre ces relations et les charge sur la puce de l'appareil, objet de la présente invention. Ainsi, le programme chargé sur la puce a acquis une meilleure capacité de reconnaître tout texte libre dictée par cette même voix.
   Le programme de reconnaissance vocale, inscrit sur la puce électronique de l'appareil de conversion, objet de la présente invention, peut donc être personnalisé par le fournisseur, qui disposerait d'une machine permettant d'identifier les relations sus-décrites et d'en charger la puce de l'appareil à fournir à l'utilisateur final.
   **P**ar ailleurs, le programme porté sur la puce électronique, objet principal de la présente invention, peut accepter les fonctionnalités, dites facultatives, suivantes:
→ la restitution vocale du montant converti et du libellé de la devise de ce montant,
   Cette fonctionnalité est intéressante pour les personnes qui ont besoin de lunettes pour lire. Elle présente le défaut d'augmenter la taille et le poids de l'appareil, mais c'est une valeur ajoutée indéniable. Si cette fonctionnalité est retenue, elle pourrait être accompagnée d'un affichage sur écran(s), tel que défini plus haut, pour permettre à l'utilisateur final de contrôler sa dictée du couple 'montant et devise à convertir' et pour prendre le temps de mémoriser le résultat de la conversion, par consultation des écrans.
→ une indication sur l'état de la source d'énergie,
   Cette fonctionnalité -facultative- peut être déclinée, suivant le mode de restitution du résultat retenu,
   - soit par l'affichage d'un icône clignotant ou non, suivant l'état mauvais ou bon du niveau d'énergie fournie par la source d'énergie retenue, en même temps que les écrans sont activées par un affichage de montants et de codes-devises,
   - soit par un message sonore sous forme d'une séquence de bip, par exemple.

**L**a description du programme, inscrit sur la puce électronique de l'appareil, objet de la présente invention, met en oeuvre les autres composants de l'appareil que nous caractérisons ainsi,
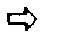 le microphone,
   - caractérisé en ce qu'il permet à l'utilisateur de l'appareil dans sa formule 'Nationale',de dicter le montant à convertir et la devise dans laquelle est exprimé ce montant,
   - caractérisé en ce qu'il permet à l'utilisateur de l'appareil dans sa formule 'Internationale', de dicter le montant à convertir, la devise dans laquelle est exprimé ce montant et éventuellement, la devise dans laquelle doit s'exprimer la conversion s'il ne s'agit pas de la devise de référence.
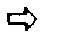 la source d'énergie,
   caractérisée en ce que, si elle est activée, elle déclenche le déroulement du programme portée par la puce électronique, et fournit l'énergie nécessaire aux différents composants de l'appareil. Cette source d'énergie peut être une pile-bouton, une batterie rechargeable ou de source solaire.
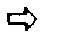 le bouton d'allumage d'énergie,
   caractérisé en ce qu'il comporte 2 positions, une position 'on' et une position 'off' et peut être constitué,
   - soit, d'un bouton à 2 positions franches pour établir la connexion électrique ou l'interrompre,
   - soit, d'un bouton poussoir qu'il faut maintenir dans l'une de ces 2 positions, pour garder la connexion électrique pendant l'utilisation de l'appareil et qu'il suffit de lâcher quand on souhaite interrompre l'usage de l'appareil.
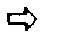 le dispositif de rechargement de la source d'énergie,
   un système de rechargement de la batterie si une batterie est la source d'énergie retenue, caractérisé en ce qu'il permet de recharger la batterie sur le secteur à travers un petit transformateur.
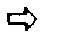 le(s) écran(s) d'affichage,
   caractérisé en ce qu'il permet l'affichage du 〈〈 montant à convertir et du libellé de sa devise 〉〉 et du 〈〈 montant converti et du libellé de sa devise 〉〉, sur une ligne par écran ou, sur les 2 lignes du même écran. Le(s) écran(s) est (sont) des éléments qui peuvent ne pas être utilisés.
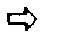 le haut-parleur,
   caractérisé en ce qu'il restitue le montant converti et le libellé de la devise de ce montant, en même temps que l'affichage de ce même montant et le code de la devise de conversion apparaissent sur l'écran. Le haut-parleur est un objet, qui peut ne pas être utilisé, pour des raisons de prix de revient à contenir.

## Revendications

1. Appareil portable, à usage du grand public, qui a pour fonction de convertir une monnaie d'une devise dans une autre devise, à partir d'un programme enregistré sur une puce électronique et, assurant une fonction de reconnaissance vocale s'exerçant sur la langue nationale du pays dans lequel l'appareil a été mis à disposition de l'utilisateur final.

2. Programme selon la revendication 1, caractérisé par son système de paramétrage, qui porte,
- le nombre de devises qu'il peut convertir entre elles, leurs libellés et les codes des libellés,
- le code de la devise de la monnaie de référence (correspondant à la monnaie nationale du pays dans lequel l'appareil est mis à disposition de l'utilisateur final), qu'il doit servir par son opération de conversion.
- les valeurs des parités à un instant entre les devises qu'il doit convertir,
- les données nécessaires à la personnalisation de la reconnaissance vocale, pour s'adapter à des voix ou accents atypiques.

3. Fonction de reconnaissance vocale selon la revendication 1, caractérisée en ce qu'elle reconnaît automatiquement, toute forme d'expression du montant à convertir, exprimé dans la devise et dans la langue du pays pour lequel l'appareil a été programmé.

4. Programme selon la revendication 2, caractérisé par le fait qu'il doit restituer le résultat de la conversion commandée oralement, par restitution orale du montant converti et du libellé de sa devise et (ou) par affichage sur écran du montant converti et du code de sa devise.
